# EUROPEAN PATENT APPLICATION

(11) **EP 2 876 530 A1**
(43) Date of publication of application: **27.05.2015**
(21) Application number: 14193378.8
(22) Date of filing: 17.11.2014
(51) Int. Cl.: G06F 3/041, G06F 3/0488

(54) **Devices and methods of touch communications**

(30) Priority: 22.11.2013 US 201361907597 P; 25.11.2013 US 201361908357 P; 04.12.2013 US 201361911525 P; 12.11.2014 US 201414539133
(71) Applicant: MediaTek Inc., Hsin-Chu 300 (TW)
(72) Inventor: Chiang, Tsung-Yueh, 420 Taichung City (TW); Liao, Wan-Chun, 105 Taipei City (TW); Chang, Tzu-Wen, 105 Taiwan City (TW); Ting, Shang-Lun, 111 Taipei City (TW); Huang, Jing-Kuang, 300 Hsinchu (TW)
(74) Representative: Goddar, Heinz J.

(57) **Abstract**

A touch communications device includes a first touch panel and a processor. When a second touch panel of another touch communications device is close to or in contact with the first touch panel of the touch communications device, the processor obtains relative movement information about a relative movement between the touch communications device and the other touch communications device. The processor executes a corresponding action according to the relative movement information.

## Description

### CROSS REFERENCE TO RELATED APPLICATIONS

This application claims the benefit of U.S. Provisional Application No. 61/907,597, filed on Nov. 22, 2013, U.S. Provisional Application No. 61/908,357, filed on Nov. 25, 2013, and U.S. Provisional Application No. 61/911,525, filed on Dec. 4, 2013, the contents of which are incorporated herein by reference.

### BACKGROUND OF THE INVENTION

### Field of the Invention

The disclosure relates generally to methods and devices of signal transmission, and more particularly to methods and electronic devices of touch communications.

### Description of the Related Art

NFC (Near Field Communication) is a contactless identification and interconnection technology, which allows users to intuitively exchange information and access content and services among mobile devices, consumer electronics, personal computers, or intelligent electronic devices by methods of near magnetic field communication, such as using 13.56MHz of near magnetic field communication.

Since the market demand for integrated NFC in handheld devices such as mobile phones is mature, NFC supports mobile payment or can act as a point-of-sale (POS) system. However, since NFC is based on magnetic fields to transmit and receive signals, it is necessary to install inductive card reader or some elements with a similar function to handheld devices or mobile phones, which causes the handheld devices to become bigger and is a limitation to the structured layout and component material of the mobile phones and other handheld devices.

Therefore, there is a recently developed touch communications technology for a touch-panel device, such as that recited in patent applications US 2011/0304583, US 2013/0147760, and CN 102916729A, which communicates by the original panel and the original driver IC of the touch-panel device. The touch-panel device includes a touch sensor. At least a portion of the touch sensor is at least a portion of the touch panel included in the touch-panel device. The touch panel could be a touch panel without a display function (e.g. a touch pad) or a touch panel with a display function (e.g. a touch screen). The touch sensor includes a plurality of driving electrodes and a plurality of sensing electrodes which constitute capacitive structures on a substrate. At least one of the driving electrode and the sensing electrode can act as a transmitting electrode, and at least one of the driving electrode and the sensing electrode can act as a receiving electrode. Therefore, the signals can be transmitted and received by the original electrode and the original driving IC of the touch-panel device, to realize touch communications based on electric fields without an inductive card reader or components with a similar function being incorporated. It saves volume and cost than the previous near field communication technology.

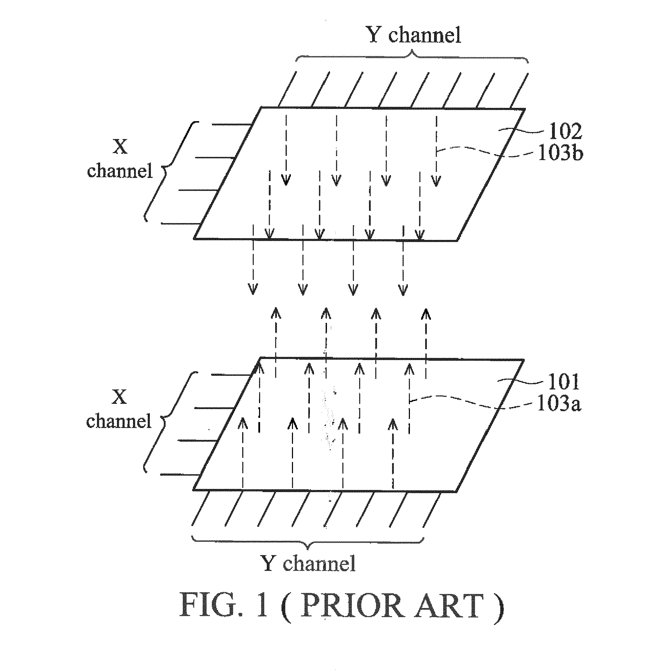

FIG. 1 is a schematic diagram illustrating touch communications between the first touch-panel device and the second touch-panel device in accordance with the prior art. As shown in FIG. 1, there are near electric fields 103a and 103b between the first touch-panel device 101 and the second touch-panel device 102. It should be noted that the first touch-panel device 101 and the second touch-panel device 102 are both capable of transmitting and receiving signals. In the touch communications technology, when the first touch-panel device 101 transmits a signal to the second touch-panel device 102, the communication media of the transmission is the electric field whose direction is toward the second touch-panel device 102 (the near electric field 103a shown in FIG. 1). When the second touch-panel device 102 transmits a signal to the first touch-panel device 101, the communication media of the transmission is the electric field whose direction is toward the first touch-panel device 101 (the near electric field 103b shown in FIG. 1). The X channel and Y channel shown in FIG. 1 represent the transmitting electrode and the receiving electrode, respectively, which constitute capacitive structures on the substrate.

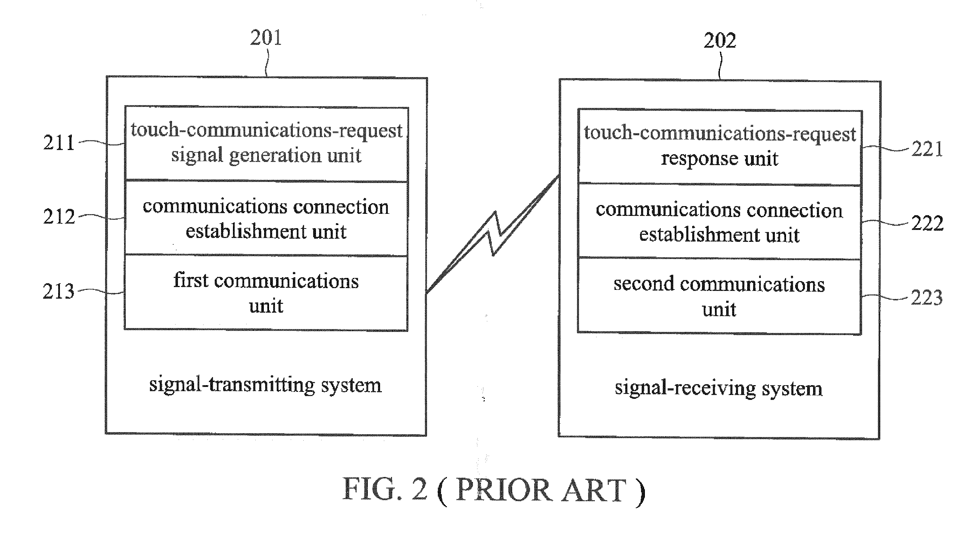

FIG. 2 is a block diagram of the implemented touch communications system between the first touch-panel device and the second panel device in accordance with the prior art. The first touch-panel device 101 includes the signal-transmitting system 201 which is shown in FIG. 2, and the second touch-panel device 102 includes the signal-receiving system 202, which is shown in FIG. 2. The signal-transmitting system 201 includes the touch-communications-request signal generation unit 211, the communications connection establishment unit 212, and the first communications unit 213. The touch-communications-request signal generation unit 211 is used to generate a touch-communications-request signal which is transmitted to the second touch-panel device 102 via the transmitting electrode. After the receiving electrode receives the response signal as a reply from the second touch-panel device 102, the communications connection establishment unit 212 performs actions to establish the communications connection with the second touch-panel device 102. After establishing the communications connection, the first communications unit 213 can transmit information and/or data to the second touch-panel device 102 via the transmitting electrode.

The signal-receiving system 202 includes the touch-communications-request response unit 221, the communications connection establishment unit 222, and the second communications unit 223. After the touch-communications-request response unit 221 receives the touch-communications request signal, which is transmitted by the first touch-panel device 101, via the receiving electrode, a response signal is sent in reply to the first touch-panel device 101 via the transmitting electrode. After the touch-communications-request response unit 221 replies with the response signal to the first touch-panel device 101, the communications connection establishment unit 222 helps establish communications connection with the first touch-panel device 101. After the communications connection is established, the second communications unit 223 can receive information and/or data from the first touch-panel device 101 via the receiving electrode.

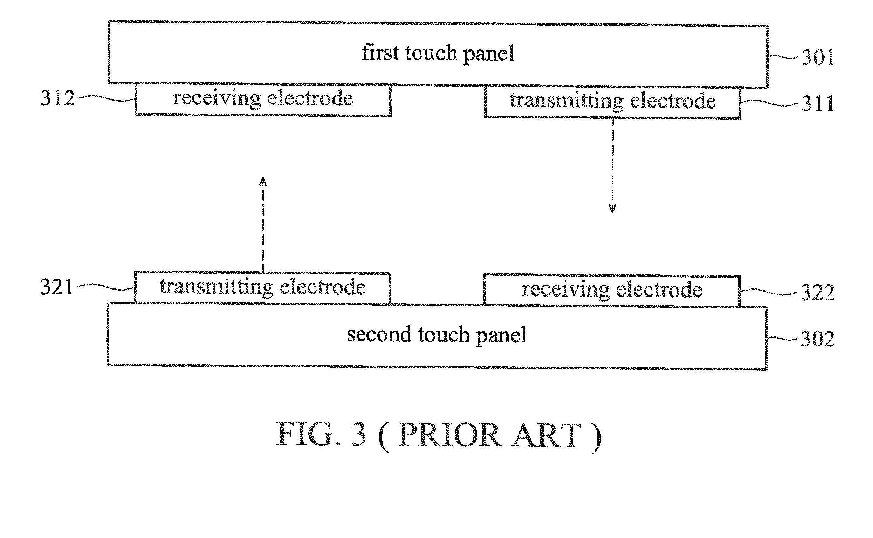

As shown in FIG. 3, the first touch panel 301 and the second touch panel 302 further includes a touch sensor (not fully shown in FIG. 3), where the touch sensor includes a plurality of transmitting electrodes 311, 321 and the receiving electrodes 312, 322, which constitute capacitive structures on the substrate and are respectively used to transmit and to receive the signals.

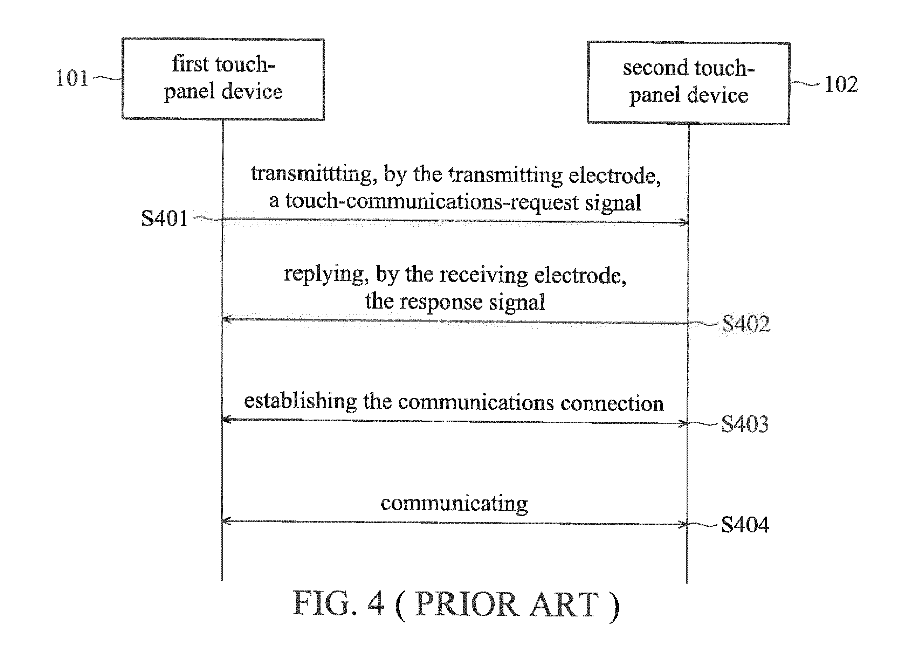

FIG. 4 is a flow chart of the touch communications method in accordance with the prior art. First, in Step S401, the touch-communications-request signal generation unit 211 generates a touch-communications-request signal which is transmitted to the second touch-panel device 102 via the transmitting electrode. Then, after the receiving electrode receives the response signal replied by the second touch-panel device 102 (Step S402), the communications connection establishment unit 212 helps establish the communications connection with the second touch-panel device 102 (Step S403). Finally, in Step S404, the first communications unit 213, by the transmitting electrode, can transmit information and/or data to the second touch-panel device 102.

However, no method of triggering the touch-panel device to execute an action is provided by the prior art.

### BRIEF SUMMARY OF THE INVENTION

To solve the above problems, the invention provides a touch communications device and a signal transmission method. The invention further integrates the touch communications device with an electronic device.

In an embodiment, a touch communications device comprises a first touch panel and a processor. When a second touch panel of another touch communications device is close to or in contact with the first touch panel, the processor obtains relative movement information about the relative movement between the touch communications device and the other touch communications device, and the processor executes a corresponding action according to the relative movement information.

In an embodiment of a touch communications device, a distance between the first touch panel and the second touch panel, which is close to or in contact with the first touch panel, does not exceed a predetermined distance.

In an embodiment of a touch communications device, the relative movement information is transmitted from the other touch communications device to the touch communications device.

In an embodiment of a touch communications device, the touch communications device detects to obtain the relative movement information.

In an embodiment of a touch communications device, the relative movement information comprises a relative movement path between the first touch panel and the second touch panel.

In an embodiment of a touch communications device, the first touch panel comprises at least one electrode for detecting the relative movement path.

In an embodiment of a touch communications device, the second touch panel comprises at least one electrode for detecting the relative movement path.

In an embodiment of a touch communications device, the other touch communications device further comprises a proximity sensor, a gyro sensor, an accelerometer, a Bluetooth module, a Wi-Fi module, a global positioning system module, a modem, or a combination thereof for detecting the relative movement information.

In an embodiment of a touch communications device, the touch communications device further comprises a proximity sensor, a gyro sensor, an accelerometer, a Bluetooth module, a Wi-Fi module, a global positioning system module, a modem, or a combination thereof for detecting the relative movement information.

In an embodiment of a touch communications device, the corresponding action executed by the processor according to the relative movement information comprises controlling a device other than the other touch communications device, executing a corresponding application, or a combination thereof.

In an embodiment of an electronic device, comprising a sub-region, wherein the sub-region comprises the touch communications device above.

In an embodiment of a signal transmission method, the signal transmission method is suitable for a touch communications device, and the touch communications device comprises a first touch panel and a processor. The signal transmission method comprises, when a second touch panel of another touch communications device is close to or in contact with the first touch panel, obtaining, by the processor, the relative movement information about the relative movement between the touch communications device and the other touch communications device; and executing, by the processor, a corresponding action according to the relative movement information.

In an embodiment of a signal transmission method, a distance between the first touch panel and the second touch panel, which is close to or in contact with the first touch panel, does not exceed a predetermined distance.

In an embodiment of a signal transmission method, the signal transmission method further comprises transmitting, by the other touch communications device, the relative movement information to the touch communications device.

In an embodiment of a signal transmission method, the signal transmission method further comprises detecting to obtain, by the touch communications device, the relative movement information.

In an embodiment of a signal transmission method, the relative movement information comprises a relative movement path between the first touch panel and the second touch panel.

In an embodiment of a signal transmission method, the first touch panel comprises at least one electrode for detecting the relative movement path.

In an embodiment of a signal transmission method, the second touch panel comprises at least one electrode for detecting the relative movement path.

In an embodiment of a signal transmission method, the other touch communications further comprises a proximity sensor, a gyro sensor, an accelerometer, a Bluetooth module, a Wi-Fi module, a global positioning system module, a modem, or a combination thereof for detecting the relative movement information.

In an embodiment of a signal transmission method, the touch communications device further comprises a proximity sensor, a gyro sensor, an accelerometer, a Bluetooth module, a Wi-Fi module, a global positioning system module, a modem, or a combination thereof for detecting the relative movement information.

In an embodiment of a signal transmission method, the corresponding action executed by the processor according to the relative movement information comprises controlling a device other than the other touch communications device, executing a corresponding application, or a combination thereof.

A detailed description is given in the following embodiments with reference to the accompanying drawings.

### BRIEF DESCRIPTION OF DRAWINGS

The invention can be more fully understood by reading the subsequent detailed description and examples with references made to the accompanying drawings, wherein:
FIG. 1 is a schematic diagram illustrating touch communications between the first touch-panel device and the second touch-panel device in accordance with the prior art;
FIG. 2 is a block diagram of the implemented touch communications system between the first touch-panel device and the second panel device in accordance with the prior art;
FIG. 3 is a schematic diagram of the first touch-panel device and the second touch-panel device in accordance with the prior art;
FIG. 4 is a flow chart of the touch communications method in accordance with the prior art;
FIG. 5 illustrates the operating environment of the touch panel in accordance with an embodiment of the invention;
FIG. 6 is a block diagram of the touch communications device in accordance with an embodiment of the invention;
FIG. 7 is a flow chart of the signal transmission method in accordance with an embodiment of the invention;
FIGs. 8A-8B are schematic diagrams of the relative movement between the touch communications devices in accordance with an embodiment of the invention;
FIGs. 9A-9D are schematic diagrams of the relative movement between the touch communications devices in accordance with an embodiment of the invention;
FIGs. 10A-10B illustrate the relative movement between the touch communications devices in accordance with another embodiment of the invention;
FIGs. 11A-11B illustrate the relative rotation between the touch communications devices in accordance with an embodiment of the invention; and
FIG. 12 is a schematic diagram of an electronic device equipped with the touch communications device in accordance with an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

The disclosure is related to communication methods, devices, and systems among touch communications devices. The touch communications device of the invention may include a touch panel. It is noted that the touch panel included in the touch communications device may be a touch panel without a display function (e.g. a touch pad), or a touch panel with a display function (e.g. a touch screen). Although the touch panel with the display function is mentioned in some embodiments of the invention, the touch panel without the display function can be similarly used in these embodiments as well. The communications between the touch communications devices of the invention can be realized by the interaction of the electric field and/or magnetic field between two touch panels which are close to each other. The touch communications device of the invention can be any type of electronic device or system. For example, the touch communications device can be a personal digital assistant, a mobile phone, a smart phone, a wearable device, a laptop, a tablet, a game device, an electronic book, a calculator, a television, a kiosk, an automatic teller machine, a digital photo frame, a point of sales terminal, a digital map, or any other electronic device in whole or in part. It should be noted that the touch communications devices performing communication, either the receiving side or the transmitting side, can be mobile devices, stationary devices, or a combination thereof.

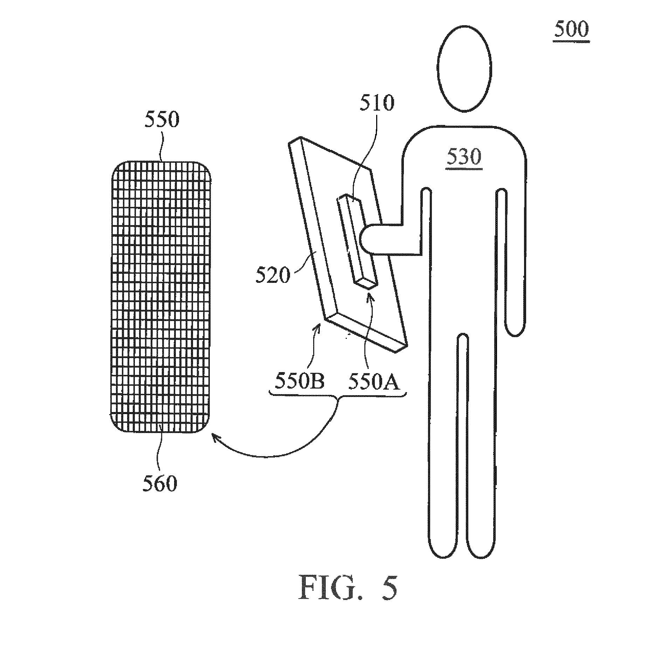

FIG. 5 illustrates the operating environment 500 of the touch panel in accordance with an embodiment of the invention. As shown in FIG. 5, the user 530 may use the first electronic device 510 to be close to or in contact with the second electronic device 520. The first electronic device 510 may include the first touch panel 550A, and the second electronic device 520 may include the second touch panel 550B. The first touch panel 550A and the second touch panel 550B may be referred to generically, or collectively, as touch panel 550, and each of the touch panel 550 may include the electrode grid 560. The electrodes of the electrode grid 560 may be a plurality of driving electrodes and a plurality of sensing electrodes which are disposed on a substrate of the touch panel for forming the capacitive structure.

When the first touch panel 550A is close to or in contact with or overlaps with the second touch panel 550B, the electric fields of the electrode grid 560 corresponding to the first touch panel 550A and the second touch panel 550B can interact, so that the communication between the first electronic device 510 and the second electronic device 520 can be performed. The first touch panel 550A is close to or in contact with or overlapping with the second touch panel 550B or the second touch panel 550B is close to or in contact with or overlapping with the first touch panel 550A means the distance between the first touch panel 550A and the second touch panel 550B does not exceed a predetermined distance. According to an embodiment of the invention, the maximum distance for performing the communications between the first touch panel 550A and the second touch panel 550B is 2 cm, so that the predetermined distance may be 2cm. That is, the second touch panel 550B being close to or in contact with or overlapping with the first touch panel 550A may mean that the distance between the first touch panel 550A and the second touch panel 550B is not larger than 2cm. According to another embodiment of the invention, to maintain the distance between the first touch panel 550A and the second touch panel 550B not exceeding a predetermined distance, the first touch panel 550A may be in contact with the second touch panel 550B. It should be noted that the maximum distance to carry out the communications being 2 cm herein is merely an example. The distance limitation will vary with the touch panel, its driving IC, and the design of the electronic device, and may be greater, such as 5 cm, or may be less, such as 2 mm, and so on. In addition, it should be noted that, although the area of the first touch panel 550A shown in FIG. 5 is less than that of the second touch panel 550B, this is only an example, and the area of the first touch panel 550A can be equal to or greater than the area of the second touch panel 550B, according to design requirements.

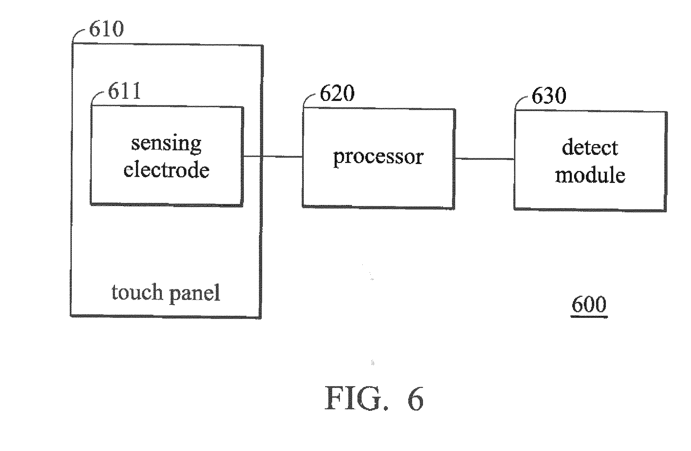

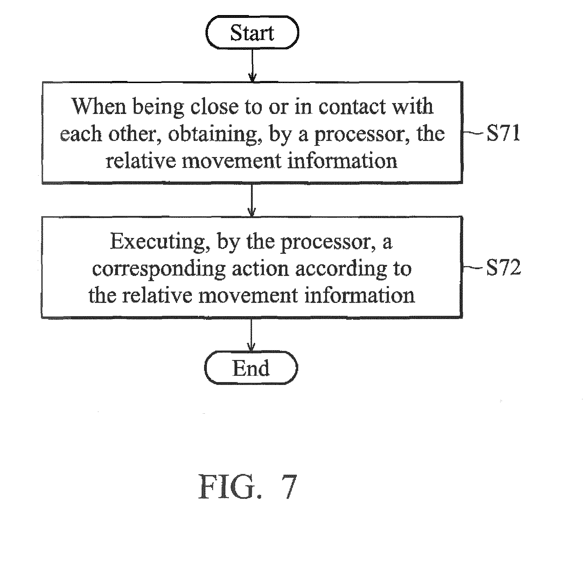

FIG. 6 is a block diagram of the touch communications device 600 in accordance with an embodiment of the invention. FIG. 7 is a flow chart of the signal transmission method in accordance with an embodiment of the invention. FIG. 6 and FIG. 7 can be read together. As shown in FIG. 6, the touch communications device 600 may include the touch panel 610, the processor 620, and the detect module 630. The touch panel 610 (with or without the display function) may provide touch functionality for the user. The touch panel 610 also includes the sensing electrode 611 which can be used to detect the proximity or the contact of another touch communications device, to detect the relative movement path between the touch communications device 600 and another touch communications device, and to transmit or receive information. According to an embodiment of the invention, the sensing electrode 611 is the electrode grid 560 in FIG. 5. When a touch panel of another touch communications device is close to or in contact with the touch panel 610, the processor 620 may obtain the relative movement information about the relative movement between the touch communications device 600 and another touch communications (Step S71). The processor 620 may also execute an action corresponding to the obtained relative movement information (Step S72). The executed action may include, but is not limited to, controlling a device other than the other touch communications device, executing a corresponding application, or a combination thereof.

According to an embodiment of the invention, when a touch panel of another touch communications device is close to or in contact with the touch panel 610, a communications channel may be established between two touch communications devices, and the two touch communications devices may transmit data to each other via this communications channel. For example, another touch communications device can transmit the relative movement information between the two touch communications devices to the touch communications device 600. Another touch communications device may use the electrode(s) of its own touch panel to detect the relative movement path and/or the relative movement angle between itself and the touch communications device 600, and may also use its own detect module to detect the relative movement information. The detect module may be a proximity sensor, a gyro sensor, an accelerometer, a Bluetooth module, a Wi-Fi module, a global positioning system (GPS), a modem, or a combination thereof, but it is not limited thereto. A method of detecting the relative movement information by a proximity sensor, a gyro sensor, or an accelerometer may use, for example but not limited thereto, the sensors to determine the proximity of each other or the movement of itself. The method of using a Bluetooth module or a Wi-Fi module may, for example, detect the strength of a Bluetooth signal or a Wi-Fi signal issued by the other device. If the detected signal is getting stronger, it can be interpreted as that the other device is approaching, but not limited thereto. Its own movement can be ascertained by a global positioning system or a modem (namely, using the mobile communications system), but not limited herein.

The relative movement information can be obtained through detection by the touch communications device 600 itself. For example, the relative movement path and/or relative movement angle between itself and another touch communications device may be detected by the sensing electrode 611, the relative movement information may be detected by the detect module 630, or a combination thereof, but not limited herein. The detect module 630 may be a proximity sensor, a gyro sensor, an accelerometer, a Bluetooth module, a Wi-Fi module, a global positioning system (GPS), a modem, or a combination thereof, but not limited herein. The method of using the detect module 630 has been described above and will not be repeated here.

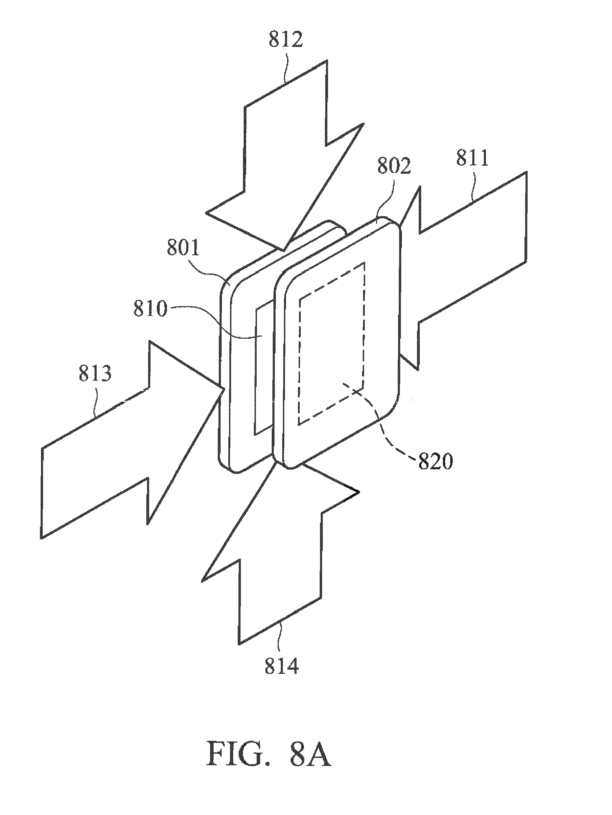

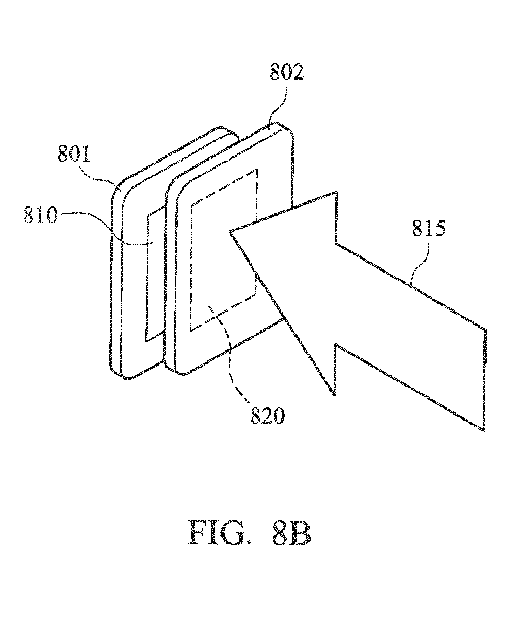

FIGs. 8A-8B are schematic diagrams of the relative movement between the touch communications devices in accordance with an embodiment of the invention. As shown in FIGs. 8A and 8B, the second touch panel 820 of the second touch communications device 802 may be close to or in contact with the first touch panel 810 of the first touch communications device 801 in the first direction 811, the second direction 812, the third direction 813, the fourth direction 814, or the fifth direction 815, which is vertical to the first touch panel 810. However, the first direction 811 to the fifth direction 815 are merely illustrations, and the second touch panel 820 of the second touch communications device 802 can also be close to or in contact with the first touch panel 810 of the first touch communications device 801 from any other direction. When the first touch communications device 801 and the second touch communications device 802 be close to or in contact with each other, a communications channel between them can be established for the second touch communications device 802 to transmit data to the first touch communications device 801, the first touch communications device 801 to transmit data to the second touch communications device 802, or both. The relative movement information between first touch communications device 801 and the second touch communications device 802 can be detected by one of them or both. The obtaining and transmission of the relative movement information are similar to the description of FIG. 6 and will not be repeated here.

According to one embodiment of the invention, the first direction 811, the second direction 812, the third direction 813, the fourth direction 814, and the fifth direction 815 are centripetal directions. In another embodiment, they can be centrifugal directions.

After the first touch communications device 801 obtains the relative movement information between itself and the second touch communications device 802, a corresponding action can be executed according to the relative movement information. For example, the first direction 811 may correspond to the ATM service, the second direction 812 may correspond to the online shopping service, the third direction 813 may correspond to the ticket service, the fourth direction 814 may corresponds to the E-mail application, and the fifth direction 815 may corresponds to the web browser. When the second touch communications device 802 approaches the first touch communications device 801 in the first direction 811, the relative movement information can be transmitted from the second touch communications device 802 to the first touch communications device 801, or detected by the first touch communications device 801. After the first touch communications device 801 obtains the relative movement information, the ATM service corresponding to the first direction 811 would be executed.

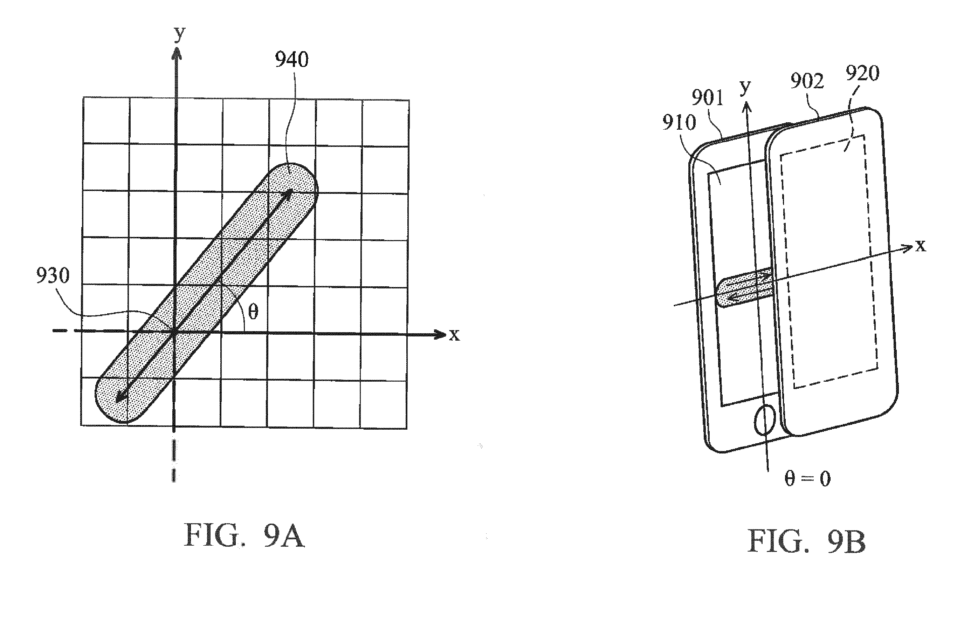

FIGs. 9A-9D are schematic diagrams of the relative movement between the touch communications devices in accordance with an embodiment of the invention. As shown in FIG. 9A, the first central point 930 of the first touch panel 910 of the first touch communications device 901 may be defined as the origin of the coordinate axes, and the vertical axis Y and the horizontal axis X may be placed on the first touch panel 910. The relative movement path 940 of the second touch panel 920 of the second touch communications device 902 may be linear, and the angle to the horizontal axis X may be the angle θ.

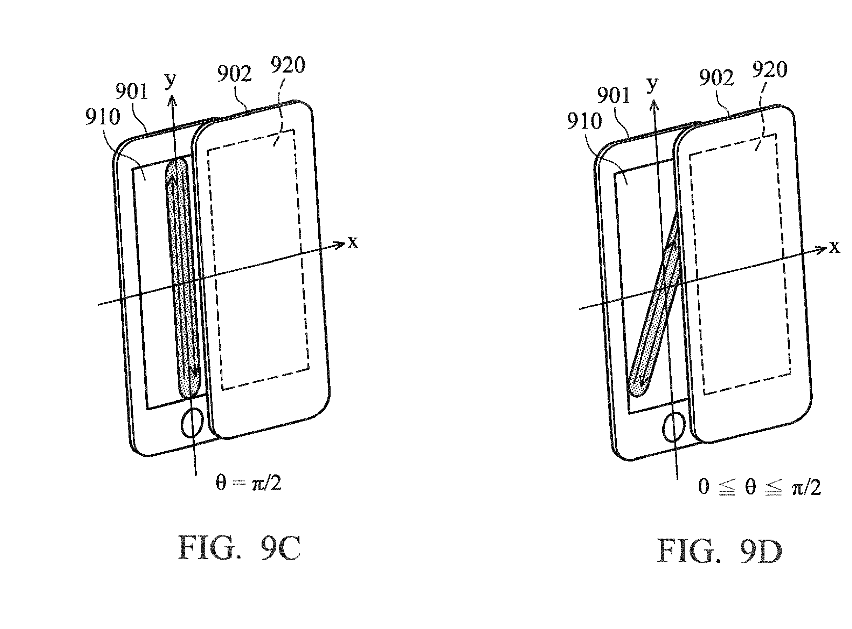

As shown in FIGs. 9B and 9C, the second touch communications device 902 may move linearly in a horizontal direction (θ = 0) or move linearly in a vertical direction (θ = π/2) relative to the first touch communications device 901. FIG. 9D illustrates that the angle from the linear movement of the second touch communications device 902 relative to the first touch communications device 901 to the horizontal axis X is the angle θ, and θ is between 0 and π/2. According to an embodiment of the invention, at least one electrode of the first touch panel 910 may detect the overlapping part between the second touch panel 920 and the first touch panel 910 and obtain the geometric center for a plurality of times, and the movement path of the geometric center can be the relative movement path. According to another embodiment of the invention, when detecting the relative movement, the first touch panel 910 and the second touch panel 920 may be in parallel or at an angle to each other. It should be noted that, although the relative movement path is detected by at least one electrode of the first touch panel 910 in the embodiment mentioned above, it may be detected and transmitted to the first touch communications device 901 by at least one electrode of the second touch panel 920 in other embodiments, or the relative movement may be detected by both and transmitted to one of them to determine the final result.

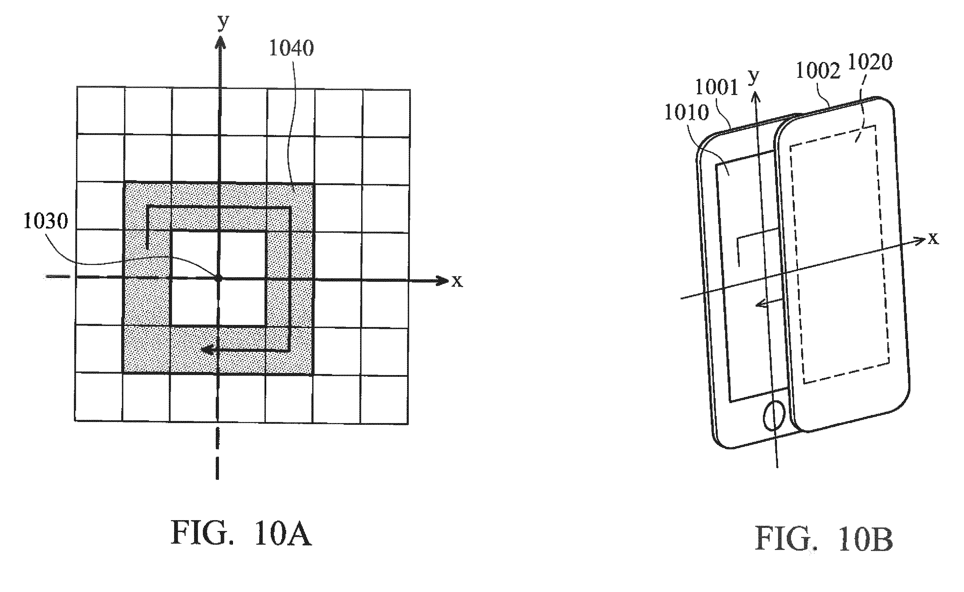

FIGs. 10A-10B illustrate the relative movement between the touch communications devices in accordance with another embodiment of the invention. According to a principle similar to that mentioned above, the first touch communications device 1001 may know the relative movement path between the second touch panel 1020 of the second touch communications device 1002 and the first touch panel 1010 of the first touch communications device 1001 is a broken line.

Although the relative movement path is a straight line or a broken line in the embodiments mentioned above, the relative movement path may be an arc, a polygon, a circle, or any variation, and it is not limited thereto in the embodiments. After the first touch communications device obtains the relative movement information, such as the relative movement path in FIGs. 9A-10B, a corresponding action may be executed according to the information, such as opening the music player application corresponding to a path of a horizontal straight-line, opening the photo browser corresponding to a path of a vertical straight-line, opening a document processing application corresponding to a path of a triangle, and so on. However, it is not limited thereto.

According to an embodiment of the invention, it is assumed that the first touch panel 1010 of the first touch communications device 1001 is smaller than the second touch panel 1020 of the second touch communications device 1002. When the second touch communications device 1002 moves relative to the first touch communications device 1001, the first touch communications device 1001 may probably determine that the second touch communications device 1002 does not move since the second touch panel 1020 may keep covering the first touch panel 1010 during the movement. However, the second touch communications device 1002 may detect the movement of the first touch communications device 1001 relative to itself during the movement.

Therefore, when the first touch communications device 1001 obtains the relative movement information of the second touch communications device 1002, in addition to considering the relative movement information of the second touch communications device 1002 detected by the first touch communications device 1001, the relative movement of the first touch communications device 1001 detected by the second touch communications device 1002 may be considered as well and transmitted to the first touch communications device 1001 to obtain more accurate relative movement information from combining both.

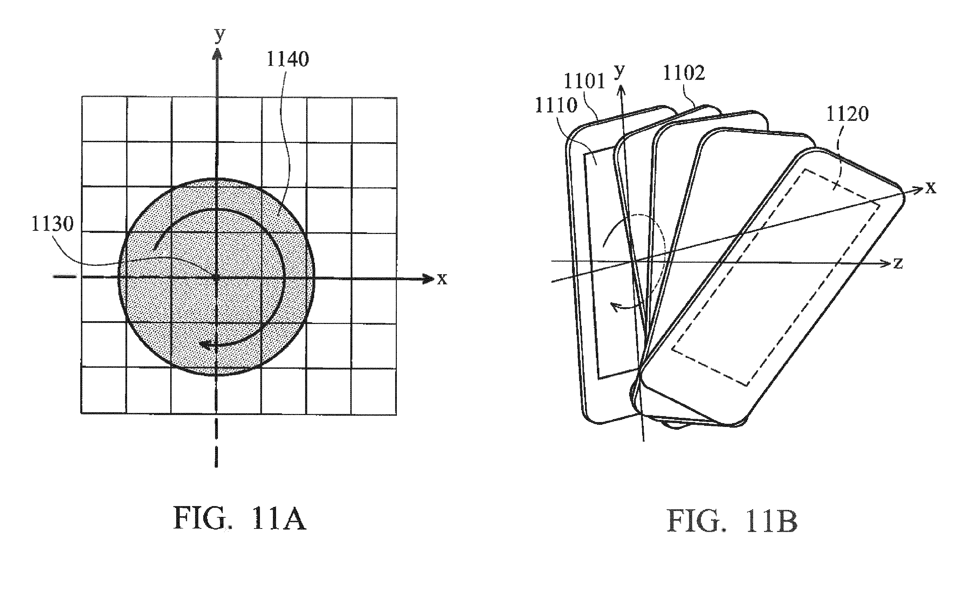

FIGs. 11A-11B illustrate the relative rotation between the touch communications devices in accordance with an embodiment of the invention. In FIG. 11A, the first center point 1130 of the first touch panel 1110 of the first touch communications device 1101 may be defined as the origin of the coordinate axes, and the vertical axis Y and the horizontal axis X may be placed on the first touch panel 1110. The relative movement path 1140 represents the relative movement path of the second touch panel 1120 of the second touch communications device 1102 moving relatively against the first touch panel 1110 in FIG. 11.

According to an embodiment of the invention, at least one electrode of the first touch panel 1110 may detect the overlapping part between the second touch panel 1120 and the first touch panel 1110 and obtain the geometric center for a plurality of times. If the movement of the geometric center of the overlapping part is under a threshold, the relative movement between the first touch panel 1110 and the second touch panel 1120 is very small. Then, according to the change of the edge of the overlapping part and the change of the length projected on the vertical axis Y and the horizontal axis X of the first touch panel 1110, it may be determined that the second touch communications device 1102 rotates relative to the first touch communications device 1101, and the direction of the rotation can be determined as well. The first touch communications device 1101 may execute a corresponding action according to the relative movement information, such as opening a predetermined game application for a clockwise rotation, or opening a social network application for a counterclockwise rotation, but it is not limited thereto.

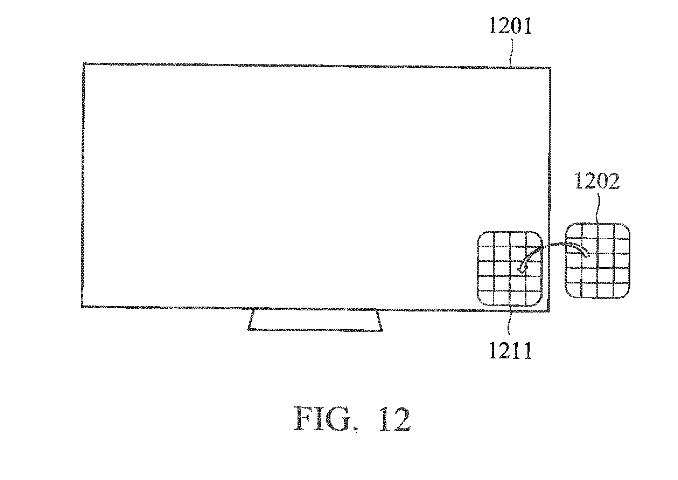

FIG. 12 is a schematic diagram of an electronic device having the touch communications device in accordance with an embodiment of the invention. Since the cost may be higher for a whole big electronic device to be a touch communications device (for example, a larger touch panel may cost more), as shown in FIG. 12, the electronic device 1201 may include the sub-region 1211 having the touch communications device with the functions of the touch communications device mentioned in the above embodiments. The sub-region 1211 and the touch communications device 1202 may transmit data to each other. Although the electronic device 1201 in FIG. 12 is a display, the electronic device 1201 may be any other device, such as a television, or a refrigerator, but it is not limited thereto.

There are lots of examples to execute an action according to the relative movement information in all the aforementioned embodiments, such as controlling other devices besides the second touch communications device, executing an application, and a combination thereof but not limited herein. Controlling devices other than the second touch communications device may, for example, include controlling the first touch communications device or devices other than the first and second touch communications devices, such as controlling the first touch communications device to dial a telephone number corresponding to a first pattern of relative movement, controlling the first touch communications device to transmit data corresponding to a second pattern of relative movement, turning on a television and switching to a default channel corresponding to a third pattern of relative movement, turning on a music player and playing a default audio track corresponding to a fourth pattern of relative movement, and so on. The executing of an application may be, for example, opening an e-mail application, such as Outlook, corresponding to a first pattern of relative movement, opening a web browser corresponding to a second pattern of relative movement, opening a ticket service application corresponding to a third pattern of relative movement, opening an ATM application corresponding to a fourth pattern of relative movement and so on, but not limited herein.

When executing an action according to the relative movement information in the aforementioned embodiments, the second touch communications device may transmit data to the first touch communications device, the first touch communications device may transmit data to the second touch communications device, or a combination thereof, so that the corresponding action may be more smoothly or more conveniently performed. For example, a first pattern of relative movement is corresponding to an online shopping service, a second pattern of relative movement is corresponding to an ATM service, a third pattern of relative movement is corresponding to a ticket service, and the fourth pattern of relative movement is corresponding to a print service. When the relative movement meets the first pattern of relative movement, the second touch communications device may transmit the username, password, and recipient information of the user to the first touch communications device, so that it is more convenient to log into the online shopping service for accelerating the shopping process; or the first touch communications device may transmit seasonal discount information or coupons to the second touch communications device as the advertisement. When the relative movement meets the second pattern of relative movement, the second touch communications device may transmit the password of the user, the account to be transferred to, and the transfer amount to the first touch communications device, so that it is more convenient to complete the transfer. When the relative movement meets the third pattern of relative movement, the second touch communications device may transmit the username and the password of the user to the first touch communications device, so that the first touch communications device may transmit the e-file or QR-code of the ticket to the second touch communications device after receiving the booking information of the user, and then the user may use the ticket. When the relative movement meets the fourth pattern of relative movement, the second touch communications device may transmit the document to be printed to the first touch communications device, and the document is printed by the first touch communications device. The description above is only an example. As mentioned above, the invention may be applied to a variety of actions and services, and both of the touch communications devices may transmit data to each other to make the use of the services more convenient.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A touch communications device, comprising:
a first touch panel; and
a processor, wherein when a second touch panel of another touch communications device is close to or in contact with the first touch panel, the processor obtains relative movement information about a relative movement between the touch communications device and the other touch communications device, and the processor executes a corresponding action according to the relative movement information.

2. The touch communications device of claim 1, wherein a distance between the first touch panel and the second touch panel, which is close to or in contact with the first touch panel, does not exceed a predetermined distance.

3. The touch communications device of claim 1 or 2, wherein the relative movement information is transmitted from the other touch communications device to the touch communications device.

4. The touch communications device of one of the preceding claims, wherein the touch communications device detects to obtain the relative movement information.

5. The touch communications device of one of the preceding claims, wherein the relative movement information comprises a relative movement path between the first touch panel and the second touch panel.

6. The touch communications device of claim 5, wherein the first touch panel comprises at least one electrode for detecting the relative movement path.

7. The touch communications device of claim 5 or 6, wherein the second touch panel comprises at least one electrode for detecting the relative movement path.

8. The touch communications device of one of the preceding claims, wherein the corresponding action executed by the processor according to the relative movement information comprises controlling a device other than the other touch communications device, executing a corresponding application, or a combination thereof.

9. A signal transmission method, suitable for a touch communications device, wherein the touch communications device comprises a first touch panel and a processor, and the signal transmission method comprises:
when a second touch panel of another touch communications device is close to or in contact with the first touch panel, obtaining, by the processor, relative movement information about a relative movement between the touch communications device and the other touch communications device; and
executing, by the processor, a corresponding action according to the relative movement information.

10. The signal transmission method of claim 9, wherein a distance between the first touch panel and the second touch panel, which is close to or in contact with the first touch panel, does not exceed a predetermined distance.

11. The signal transmission method of claim 9 or 10, further comprising:
transmitting, by the other touch communications device, the relative movement information to the touch communications device.

12. The signal transmission method of one of claims 9 to 11, further comprising:
detecting, by the touch communications device, the relative movement information.

13. The signal transmission method of one of claims 9 to 12, wherein the relative movement information comprises a relative movement path between the first touch panel and the second touch panel.

14. The signal transmission method of claim 13, wherein the first touch panel comprises at least one electrode for detecting the relative movement path.

15. The signal transmission method of claim 13 or 14, wherein the second touch panel comprises at least one electrode for detecting the relative movement path.

16. The signal transmission method of one of claims 9 to 15, wherein the corresponding action executed by the processor according to the relative movement information comprises controlling a device other than the other touch communications device, executing a corresponding application, or a combination thereof.
